# EUROPÄISCHE PATENTSCHRIFT

(11) **EP 1 584 505 B1**
(45) Veröffentlichungstag und Bekanntmachung des Hinweises auf die Patenterteilung: **05.11.2008**
(21) Anmeldenummer: 05005790.0
(22) Anmeldetag: 17.03.2005
(51) Int. Cl.: B60H 1/00

(54) **Klappenantrieb, insbesondere für Luftklappen**
Actuator for a vent, in particular an air damper
Actionneur pour un volet, en particulier un volet d'aération

(30) Priorität: 07.04.2004 DE 102004017617
(43) Veröffentlichungstag der Anmeldung: 12.10.2005
(73) Patentinhaber: Behr GmbH & Co. KG, 70469 Stuttgart (DE)
(72) Erfinder: Denk, Walter, 71254 Ditzingen (DE)

(56) Entgegenhaltungen:
- DE-A1- 3 143 672
- DE-A1- 3 603 851
- DE-A1- 4 420 160
- DE-B- 1 147 303

## Beschreibung

Die Erfindung betrifft einen Klappenantrieb, insbesondere für Luftklappen einer Belüftungs-, Heizungs- und/oder Klimatisierungseinrichtung insbesondere für ein Kraftfahrzeug, gemäß dem Oberbegriff des Anspruchs 1 und eine Belüftungs-, Heizungs- und/oder Klimatisierungseinrichtung mit einem Klappenantrieb gemäß Anspruch 9.

Üblicherweise werden Klappen zur Steuerung eines Luftstroms, beispielsweise zur Steuerung eines von einer Kraftfahrzeug-Klimaanlage kommenden, dem Fahrzeuginnenraum zuzuführenden Luftstroms, mittels Gleichstrom-Stellmotoren betätigt. An einem derartigen Stellmotor liegt beständig eine konstante Spannung an, auch wenn die Klappe ihre Endstellung erreicht hat.

Ferner sind für Klappenantriebe verwendete Stellmotoren bekannt, bei denen in der Endstellung mit Hilfe einer elektronischen Vorrichtung der Stellmotor abgeschaltet oder die Spannung reduziert wird. Hierfür sind jedoch zusätzliche elektronische Bauteile im Bediengerät erforderlich, wie z.B. eine Zeitschaltung, eine PTC-Schutzschaltung, ein Schutzwiderstand, welcher zu einem Spannungsverlust am Stellmotor führt.

Aus der DE 11 47 303 B ist eine Nullspannungs-Rückstelleinrichtung für einen elektromotorischen Antrieb von Stellgliedern bekannt.

Derartige Klappenantriebe lassen somit noch Wünsche offen.

Für andere Verwendungszwecke sind Stellmotoren bekannt, die ein internes Schaltwerk aufweisen, so dass sie sich nach einem bestimmten Verstellweg selbst abschalten.

Des Weiteren ist aus der DE 44 20160 eine Übertragungsvorrichtung zur Steuerung zweier Klappen mit Hilfe von Nochen bekannt.

Es ist Aufgabe der Erfindung, einen verbesserten und kostengünstigen Klappenantrieb zur Verfügung zu stellen.

Diese Aufgabe wird gelöst durch einen Klappenantrieb mit den Merkmalen des Anspruchs 1. Vorteilhafte Ausgestaltungen sind Gegenstand der Unteransprüche.

Erfindungsgemäß ist für einen Klappenantrieb, insbesondere für Luftklappen eines Kraftfahrzeugbelüftungs- und/oder -klimatisierungssystems, ein in seiner Endstellung nicht bestromter Gleichstrom-Stellmotor vorgesehen, wobei keine Elektronik-Schaltung vorgesehen ist. Die Funktion der herkömmlichen Elektronik-Schaltungen übernimmt eine entsprechend ausgebildete Kinematik und ein Stellmotor mit einem internen Schaltwerk, so dass der Stellmotor in mindestens einer seiner Endstellungen ausgeschaltet ist, so dass kein unnötiger Spannungsverlust am Stellmotor erfolgt. Ferner wird durch eine derartige Ausgestaltung die mögliche Lebensdauer, insbesondere in Hinblick auf die Anzahl der Laufzyklen, erhöht.

Die Ausgestaltung der Kinematik ermöglicht unter anderem, dass für unterschiedliche Serien oder Einsatzbereiche der gleiche Stellmotor verwendet werden kann, insbesondere mit gleichem Verstellweg, und lediglich die Kinematik leicht verändert werden muss. Dadurch lassen sich die Kosten für den Stellmotor in Folge der größeren Stückzahl verringern und zudem die Lagerhaltung vereinfachen.

Bevorzugt weist die Kinematik eine Schlitz-Zapfen-Führung auf. Dabei ist der Begriff Schlitz sehr weit auszulegen. Insbesondere muss er nicht notwendigerweise eine konstante Breite aufweisen. Vorliegend weist der Schlitz bevorzugt keine konstante Breite auf und ist derart ausgebildet, dass er einen linearen Bereich aufweist, bei Durchlaufen dessen eine Verstellung der Klappe erfolgt. Der lineare Bereich ist hierbei bevorzugt in Längsrichtung eines Hebelarms ausgebildet, in dem der Schlitz vorgesehen ist.

Die Kinematik weist vorzugsweise eine Schlitz-Zapfen-Führung mit einem Schlitz auf, der derart ausgebildet ist, dass er mindestens einen, vorzugsweise zwei, in einer Kurve, insbesondere in einem Kreisbogen, verlaufende Bereiche aufweist. Hierbei erfolgt bevorzugt bei Durchlaufen des kurvenförmigen Bereichs keine oder nur eine unwesentliche Verstellung der Klappe zum Aufbau einer Vorspannung, so dass die Klappe dicht an ihrer Anlage anliegt. Bevorzugt sind zwei in einen in einem Kreisbogen verlaufende Bereiche vorgesehen, wobei diese in einem Kreisbogen verlaufende Bereiche bevorzugt getrennt durch einen linearen Bereich sind. Der lineare Bereich bildet vorzugsweise die Spiegelachse der in einem Radius verlaufende Bereiche, wobei die beiden in einem Kreisbogen verlaufenden Bereiche auf der von dem linearen Bereich beabstandeten Seite unterschiedlich lang ausgebildet sein können.

Auf die Klappe wird in Folge der vorhandenen Kinematik vorzugsweise in zumindest einer ihrer Endstellungen eine Vorspannung ausgeübt, so dass auf einfache und kostengünstige Weise eine gute Anlage der Klappe gewährleistet ist.

Fertigungstoleranzen und/oder Schaltpunkttoleranzen können besonders einfach durch die Ausgestaltung des Schlitzes der Schlitz-Zapfen-Führung aufgefangen werden.

Gemäß einer bevorzugten Weiterbildung wird der erfindungsgemäße Klappenantrieb in einer Belüftungs-, Heizungs- und/oder Klimatisierungseinrichtung eingesetzt, die zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle

Im Folgenden wird die Erfindung anhand zweier Ausführungsbeispiele unter Bezugnahme auf die Zeichnung im Einzelnen erläutert. In der Zeichnung zeigen:
- Fig. 1: einen Schnitt quer durch einen Klappenantrieb gemäß dem ersten Ausführungsbeispiel, wobei die Klappe in einer ihrer Endstellungen dargestellt ist und die andere Endstellung durch eine Strich-Punkt-Linie angedeutet ist, und
- Fig. 2: einen Schnitt quer durch einen Klappenantrieb gemäß dem zweiten Ausführungsbeispiel, wobei die Klappe in einer ihrer Endstellungen dargestellt ist und die andere Endstellung durch eine Strich-Punkt-Linie angedeutet ist.

Ein Klappenantrieb 1 weist einen Stellmotor M mit einem internen Schaltwerk auf, welcher über einen Motor-Hebelarm 2 mit einem am Ende desselben vorgesehenen Zapfen 3 in einen in einem Klappen-Hebelarm 4 vorgesehen Schlitz 5 mit einer Kontur eingreift, auf die an späterer Stelle näher eingegangen wird. Der Klappen-Hebelarm 4 ist Teil einer Klappe K, die um eine Schwenkachse S verschwenkbar ist. Die Klappe K dient der Steuerung eines Luftstroms in einer Kraftfahrzeug-Klimaanlage (nicht dargestellt).

Die Klappe K ist gemäß dem ersten Ausführungsbeispiel um einen Winkel von 55° zwischen zwei Endstellungen verschwenkbar. Dagegen beträgt der Schwenkwinkel des Stellmotors M 90°. Um den gewünschten Winkel von 55° auf den vorgegebenen Schwenkwinkel des Stellmotors M abzustimmen weist der Schlitz 5 eine Kontur auf, bestehend aus einem linearen ersten Bereich 6, dessen Verlängerung durch die Schwenkachse S verläuft, zwei in einem Kreisbogen verlaufende zweite Bereiche 7, wobei der Radius der Kreisbögen der beiden Bereiche dem Abstand zwischen der Schwenkachse des Motors M und dem Zapfen 3 entspricht, und einem Verbindungsbereich 7', wobei die Übergänge zwischen den einzelnen Bereichen 6, 7 und 7' abgerundet ausgebildet sind. Aus Toleranzgründen sind die zweiten Bereiche 7 etwas länger ausgebildet als erforderlich. Die beiden zweiten Bereiche 7 sind in einem Winkel ungleich 90° zum linearen ersten Bereich 6 angeordnet, wobei die Längsachse des linearen ersten Bereichs 6 die Spiegelachse der zweiten Bereiche 7 bildet. Dabei sind die zweiten Bereiche 7 unterschiedlich lang ausgebildet.

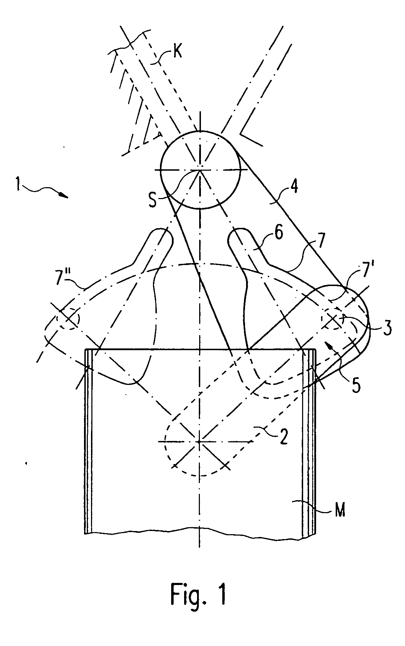

Bezug nehmend auf Fig. 1 wird im Folgenden die Kinematik des Klappenantriebs 1 näher erläutert. Erfolgt eine Betätigung des Stellmotors M, so schwenkt der Motor-Hebelarm 2 entgegen dem Uhrzeigersinn und der Zapfen 3 gleitet entlang dem ersten der zweiten Bereiche 7'. Anschließend gelangt er zum linearen ersten Bereich 6. Da der Zapfen 3 dadurch in Anlage an die in Fig. 1 links dargestellte Seite des linearen ersten Bereichs 6 gelangt, schwenkt der Klappen-Hebelarm 4 und somit die Klappe K im Uhrzeigersinn. Auf Grund des weiteren Schwenkens des Motor-Hebelarms 2 gelangt der Zapfen 3 weiter in den linearen ersten Bereich 6 bis er in der Stellung, in der die beiden Hebelarme 2 und 4 parallel zueinander angeordnet sind, den Endpunkt erreicht und bei weiterem Schwenken des Motor-Hebelarms 2 sich wieder nach außen bewegt. Erreicht der Zapfen 3 das Ende des linearen ersten Bereichs 6, so befindet sich auch die Klappe K in ihrer anderen Endstellung, die in Fig. 1 durch eine Strich-Punkt-Linie angedeutet ist. Hierbei ist auf Grund einer gewissen Vorspannung eine dichte Anlage der Klappe K an ihrer Anlagefläche gewährleistet. Ein weiteres Schwenken des Motor-Hebelarms 2 hat keinen Einfluss mehr auf die Klappenstellung. Vielmehr gleitet der Zapfen 3 entlang dem zweiten der zweiten Bereiche 7" bis etwa am Ende desselben der Stellmotor M auf Grund des vorgegebenen Schwenkwinkels von 90° automatisch abschaltet. Die Rückbewegung erfolgt entsprechend.

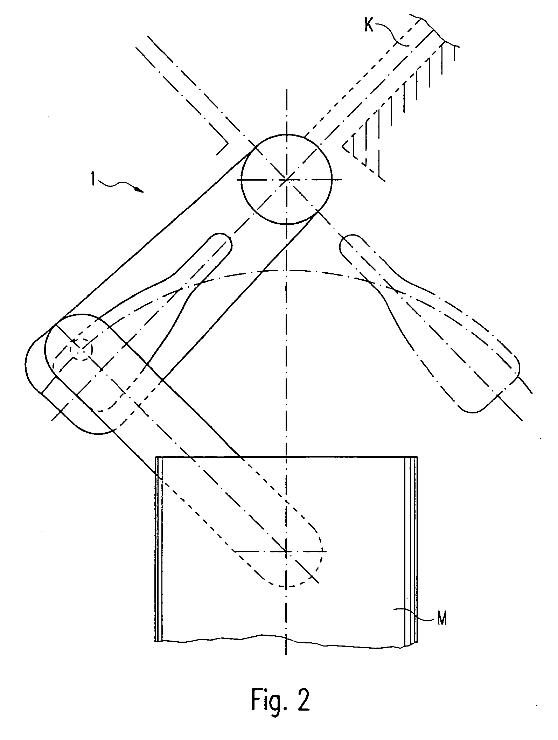

In Fig. 2 ist ein zweites Ausführungsbeispiel eines Klappenantriebs 1 dargestellt, das im Wesentlichen mit dem ersten Ausführungsbeispiel übereinstimmt, jedoch beträgt der Schwenkwinkel der Klappe K in diesem Fall 90° und entspricht somit genau dem Schwenkwinkel des Stellmotors M.

Gemäß einer nicht in der Zeichnung dargestellten Variante verläuft mindestens einer der zweiten Bereiche nicht exakt im vom Zapfen durchlaufenen Kreisbogen, sondern ist leicht geneigt hierzu ausgerichtet, wodurch ein langsames Aufbauen einer gewissen Vorspannung zur Sicherstellung einer luftdichten Anlage der Klappe an ihrer Anlagefläche sichergestellt werden kann.

### Bezugszeichenliste

- 1: Klappenantrieb
- 2: Motor-Hebelarm
- 3: Zapfen
- 4: Klappen-Hebelarm
- 5: Schlitz
- 6: lineare, erster Bereich
- 7: zweiter Bereich
- 7': erster zweiter Bereich
- 7": zweiter zweiter Bereich

- K: Klappe
- M: Stellmotor
- S: Schwenkachse

## Patentansprüche

1. Klappenantrieb, insbesondere für Luftklappen einer Belüftungs-, Heizungs- und/oder Klimatisierungseinrichtung eines Kraftfahrzeugs, welche einen Stellmotor (M) mit einem festen Verstellweg und mindestens eine Klappe (K) umfasst, wobei der Stellmotor (M) ein internes Schaltwerk aufweist und die Kinematik der Klappe (K) dem Verstellweg des Stellmotors (M) entspricht, **dadurch gekennzeichnet, dass** der Stellmotor in mindestens einer Endstellung automatisch abschaltbar ist und auf die Klappe (K) in der zumindest einen Endstellung eine Vorspannung ausgeübt wird.

2. Klappenantrieb nach Anspruch 1, **dadurch gekennzeichnet, dass** die Kinematik eine Schlitz-Zapfen-Führung aufweist, wobei der Schlitz derart ausgebildet ist, dass er einen linearen Bereich (6) aufweist, bei Durchlaufen dessen eine Verstellung der Klappe (K) erfolgt.

3. Klappenantrieb nach Anspruch 1 oder 2, **dadurch gekennzeichnet, dass** die Kinematik eine Schlitz-Zapfen-Führung aufweist, wobei der Schlitz derart ausgebildet ist, dass er mindestens einen in einem Kreisbogen verlaufenden Bereich (7) aufweist, bei Durchlaufen dessen keine Verstellung der Klappe (K) erfolgt.

4. Klappenantrieb nach Anspruch 3; **dadurch gekennzeichnet, dass** zwei in einen in einem Kreisbogen verlaufende Bereiche (7', 7") vorgesehen sind.

5. Klappenantrieb nach Anspruch 4, **dadurch gekennzeichnet, dass** die in einem Kreisbogen verlaufende Bereiche (7', 7") durch einen linearen Bereich (6) getrennt sind.

6. Klappenantrieb nach Anspruch 5, **dadurch gekennzeichnet, dass** der lineare Bereich (6) entlang der Spiegelachse der in einem Radius verlaufenden Bereiche (7', 7") verläuft, wobei die beiden in einem Kreisbogen verlaufenden Bereiche (7', 7") auf der von dem linearen Bereich (6) beabstandeten Seite unterschiedlich lang ausgebildet sein können.

7. Klappenantrieb nach einem der vorhergehenden Ansprüche, **dadurch gekennzeichnet, dass** Fertigungstoleranzen und/oder Schaltpunkttoleranzen in der Ausgestaltung des Schlitzes der Schlitz-Zapfen-Führung aufgefangen sind.

8. Verwendung eines Stellmotors (M) mit internem Schaltwerk als Klappenantrieb (1) nach einem der vorhergehenden Ansprüche, insbesondere für Luftklappen einer Belüftungs-, Heizungs- und/oder Klimatisierungseinrichtung, wobei die Kinematik der Klappe (K) dem Verstellweg des Stellmotors (M) entspricht.

9. Belüftungs-, Heizungs- und/oder Klimatisierungseinrichtung, **dadurch gekennzeichnet, dass** die Belüftungs-, Heizungs- und/oder Klimatisierungseinrichtung einen Klappenantrieb nach einem der Ansprüche 1 bis 7 aufweist.

10. Belüftungs-, Heizungs- und/oder Klimatisierungseinrichtung, nach Anspruch 9, **dadurch gekennzeichnet, dass** die Belüftungs-, Heizungs- und/oder Klimatisierungseinrichtung zumindest eines der folgenden Bauteile umfasst: Wärmetauscher, Heizkörper, Verdampfer, Filter, Temperaturmischklappe, Mischkammer, einen oder mehrere Strömungskanäle und eine oder mehrere Steuerklappen zur Verteilung der Luft auf die Austrittskanäle.

## Claims

1. Actuator, in particular for dampers in a ventilator, heater and/or air conditioner of a motor vehicle, comprising a servomotor (M) with a fixed traversing distance and at least one damper (K), wherein the servomotor (M) is provided with an internal switching mechanism and wherein the kinematics of the damper (K) correspond to the traversing distance of the servomotor (M), **characterised in that** the servomotor can be switched off automatically in at least one end position and a preload acts on the damper (K) in the at least one end position.

2. Actuator according to claim 1, **characterised in that** the kinematics comprise a slot-and-pin guide, the slot being designed such that it includes a linear region (6), which, when passed through, results in an adjustment of the damper (K).

3. Actuator according to claim 1, or 2, **characterised in that** the kinematics comprise a slot-and-pin guide, the slot being designed such that it includes at least one region (7) with the contour of a circular arch, which, when passed through, does not result in an adjustment of the damper (K).

4. Actuator according to claim 3, **characterised in that** two regions (7', 7") with the contour of a circular arch are provided.

5. Actuator according to claim 4, **characterised in that** the regions (7', 7") with the contour of a circular arch are separated by a linear region (6).

6. Actuator according to claim 5, **characterised in that** the linear region (6) runs along the mirror axis of the regions (7', 7") extending in a radius, wherein the two regions (7', 7") with the contour of a circular arch may have different lengths on the side remote from the linear region (6).

7. Actuator according to any of the preceding claims, **characterised in that** manufacturing and/or switching point tolerances are absorbed in the design of the slot of the slot-and-pin guide.

8. Use of a servomotor (M) with an internal switching mechanism as an actuator (1) according to any of the preceding claims, in particular for dampers in a ventilator, heater and/or air conditioner of a motor vehicle, wherein the kinematics of the damper (K) correspond to the traversing distance of the servomotor (M).

9. Ventilator, heater and/or air conditioner, **characterised in that** the ventilator, heater and/or air conditioner comprises an actuator according to any of claims 1 to 7.

10. Ventilator, heater and/or air conditioner according to claim 9, **characterised in that** the ventilator, heater and/or air conditioner includes at least one of the following components: heat exchanger, heater, evaporator, filter, temperature blend door, blend chamber, one or more ducts and one or more control valves for air distribution among the air outlets.

## Revendications

1. Commande de volet, en particulier pour des volets d'air d'un dispositif de ventilation, de chauffage et / ou de climatisation d'un véhicule automobile qui comprend un servomoteur (M), ayant une course de réglage fixe, et au moins un volet (K), où le servomoteur (M) présente un dispositif de commande interne, et la cinématique du volet (K) correspond à la course de réglage du servomoteur (M),
**caractérisée en ce que** le servomoteur peut être arrêté automatiquement dans au moins une position de fin de course, et une précontrainte est exercée sur le volet (K) dans la position de fin de course au moins au nombre de un.

2. Commande de volet selon la revendication 1, **caractérisée en ce que** la cinématique présente un guidage à fente et à téton, où la fente est conçue de manière telle, qu'elle présente une zone linéaire (6), un réglage du volet (K) étant réalisé en parcourant ladite zone.

3. Commande de volet selon la revendication 1 ou 2, **caractérisée en ce que** la cinématique présente un guidage à fente et à téton, où la fente est conçue de manière telle, qu'elle présente au moins une zone (7) s'étendant dans un arc de cercle, aucun réglage du volet (K) n'étant réalisé en parcourant ladite zone.

4. Commande de volet selon la revendication 3, **caractérisée en ce qu'**il est prévu deux zones (7', 7") s'étendant dans un arc de cercle.

5. Commande de volet selon la revendication 4, **caractérisée en ce que** les zones (7', 7") s'étendant dans un arc de cercle sont séparées par une zone linéaire (6).

6. Commande de volet selon la revendication 5, **caractérisée en ce que** la zone linéaire (6) s'étend le long de l'axe de symétrie des zones (7', 7") s'étendant dans un rayon, où les deux zones (7', 7") s'étendant dans un arc de cercle peuvent être configurées suivant une longueur variable, sur le côté espacé de la zone linéaire (6).

7. Commande de volet selon l'une quelconque des revendications précédentes, **caractérisée en ce que** des tolérances de fabrication et / ou des tolérances du point de déclenchement sont détectées dans la configuration de la fente du guidage à fente et à téton.

8. Utilisation d'un servomoteur (M) comprenant un dispositif de commande interne servant de commande de volet (1) selon l'une quelconque des revendications précédentes, en particulier pour des volets d'air d'un dispositif de ventilation, de chauffage et / ou de climatisation, où la cinématique du volet (K) correspond à la course de réglage du servomoteur (M).

9. Dispositif de ventilation, de chauffage et / ou de climatisation, **caractérisé en ce que** le dispositif de ventilation, de chauffage et / ou de climatisation présente une commande de volet selon l'une quelconque des revendications 1 à 7.

10. Dispositif de ventilation, de chauffage et / ou de climatisation selon la revendication 9, **caractérisé en ce que** le dispositif de ventilation, de chauffage et / ou de climatisation comprend au moins l'un des composants suivants : un échangeur de chaleur, un radiateur, un évaporateur, un filtre, un volet mélangeur de température, une chambre de mélange, un ou plusieurs conduits d'écoulement et un ou plusieurs volets de commande servant à la répartition de l'air au niveau des conduits de sortie.
